# EUROPEAN PATENT APPLICATION

(11) **EP 4 759 412 A1**
(43) Date of publication of application: **17.06.2026**
(21) Application number: 24220287.7
(22) Date of filing: 16.12.2024
(51) Int. Cl.: B01L 3/00, G01N 35/04, G01N 35/10

(54) **CLEANING STATION**

(71) Applicant: Lizenzia GmbH, 3645 Gwatt (Thun) (CH)
(72) Inventor: GYGER, Fritz, 3645 Gwatt (CH); AESCHLIMANN, Fabian Tobias, 3098 Schliern b. Koeniz (CH)
(74) Representative: Keller Schneider Patent- und Markenanwälte AG

(57) **Abstract**

A device (1) for handling a fluid, comprising a base station (100) and a fluid manipulation head with at least a first needle (201) for handling the fluid, and a fluid well holder (400), in particular a well plate-holder. The fluid manipulation head is positionable above the fluid well holder (400). The device (1) further comprises a cleaning station (500), wherein the cleaning station (500) is movable relative to the base station (100) in order to be positionable below the fluid manipulation head.

## Description

### Technical Field

The invention relates to a device for handling a fluid, comprising a base station and a fluid manipulation head with at least a first needle for handling the fluid, and a fluid well holder, in particular a well plate-holder, wherein the fluid manipulation head is positionable above the fluid well holder, and wherein the device further comprises a cleaning station. Furthermore, the invention relates to a method for cleaning a needle using such a device.

### Background Art

In many areas of biotechnology, for example peptide synthesis, ELISA, bead-based assays, cell-based assays and microsphere-based assays or similar, as well as in general chemistry, e.g. chemical analysis, the dosing and the aspirating of small volumes is of great importance.

Automated aspirating and dispensing units can tremendously improve the throughput in some of the mentioned fields by automatically aspirating or dispensing liquids into reaction vessels, for example into the wells of a microplate. An exemplary device is marketed by Fritz Gyger AG, for example, under the name Certus-Flex.

A major challenge after using such systems is to clean the needles used to dose or aspirate a liquid. In particular, when aspirating, the aspirating needles inevitably come into contact with the liquid in the well plate and must therefore be cleaned. This step is important, as high demands are generally placed on the cleanliness of the needles when they are reused. It is particularly important to avoid cross-contamination, where impurities can be carried over into the next process. The cleaning process should also remove any clogging and deposits from the needles.

Therefore, it is known in the art to provide devices for handling a fluid with a cleaning station. However, the known devices for handling a fluid, comprising a cleaning station have the disadvantage, that the known devices are complex design and therefore expensive. They also typically require a relatively large amount of space.

### Summary of the invention

It is the object of the invention to create a device pertaining to the technical field initially mentioned, which has a particularly simple structure.

The solution of the invention is specified by the features of claim 1. According to the invention, the cleaning station is movable relative to the base station in order to be positionable below the fluid manipulation head.

The fact that the cleaning station is designed to be movable relative to the base station means that a particularly compact device for handling a fluid can be provided.

To clean the needle with the cleaning station, the cleaning station is preferably moved towards the fluid manipulation head. This has the advantage that the fluid manipulation head can be formed with one degree of freedom less (which is taken over by the movable cleaning station). The fact that the cleaning station can be moved away from the fluid manipulation head after the cleaning process has been completed means that the working area around the fluid manipulation head is not or less affected. This increases the flexibility of the work processes around the fluid manipulation head, especially the fluid well holder.

The device for handling a fluid is preferably intended for handling small quantities of fluid, in particular for ELISA procedures. However, the device can also be provided for other applications in which fluids are dosed or aspirated and a needle used in the process has to be cleaned.

The term 'base station' refers to that part of the device, which is stationary during use of the device. The base station preferably comprises a support frame for the individual components, in particular the fluid manipulation head, the fluid well holder and the cleaning station. Furthermore, the base station preferably comprises a housing.

The fluid manipulation head comprises a first needle for handling the fluid. The fluid manipulation head is preferably designed in such a way that the needle can be moved at least in the longitudinal direction of the needle.

This function has the primary purpose of moving the needle towards the fluid well holder for aspirating or dispensing a liquid. When aspirating liquids in particular, it is necessary to immerse the needle in the liquid to be aspirated, which requires a relative movement in the longitudinal direction of the needle between the fluid well holder and the needle. During the cleaning process in the cleaning station, it is usually also necessary to perform such a relative movement, especially if the cleaning station comprises receptacles into which the needles are inserted and cleaned.

In principle, it is also possible to achieve this relative movement by moving the fluid well holder or the cleaning station in the longitudinal direction of the needle.

However, the design of the fluid manipulation head in such a way that the needle can be inserted into receptacles of the cleaning station has the advantage that the device only requires one actuator for height adjustment, as the fluid manipulation head can also be moved along the longitudinal direction of the needle to the fluid well holder. This results in a particularly simple design of the device.

In a method for cleaning a needle of a fluid manipulation head a device for handling a fluid is used that comprises a base station and a fluid manipulation head with at least a first needle for handling the fluid, and a fluid well holder, in particular a well plate-holder. The fluid manipulation head is positionable above the fluid receptacle holder. Therewith, preferably a fluid in a well of the fluid well holder can be manipulated, e.g. aspirated or dosed into the well. The device further comprises a cleaning station, wherein, in the method of cleaning the needle, the cleaning station is moved relative to the base station and the needle is moved along a needle longitudinal direction to the cleaning station. In a further step, the needle is cleaned by the cleaning station.

Preferably, the cleaning station is movable in a direction perpendicular to the longitudinal direction of the needle. This allows the cleaning station to be introduced efficiently into the movement space of the fluid manipulation head, so that the needle can be cleaned in the cleaning station. Particularly preferably, the cleaning station is designed to be movable exclusively in a direction at right angles to the longitudinal direction of the needle. This results in a particularly simple design of the device.

The fluid well holder comprises a holder for holding one or more containers such as a well plate or the like. Other possible containers for holding a fluid are known to the skilled person. Preferably, the fluid well holder is also designed to be movable in a direction at right angles to the longitudinal direction of a needle. This allows the fluid well holder and different sections thereof to be efficiently inserted into the movement space of the fluid manipulation head, whereby a fluid can be aspirated or dispensed through the needle in a receptacle of the fluid well holder. Particularly preferably, the fluid well holder is designed to be movable exclusively in a direction at right angles to the longitudinal direction of the needle. This results in a particularly simple design of the device.

The skilled person is aware that the fluid well holder and the cleaning station can be designed to be movable in other directions. In particular, the fluid well holder and the cleaning station can be designed to be movable in the longitudinal direction of the needle, which means that this direction of movement can be dispensed with in the fluid manipulation head.

Preferably, the cleaning station is guided along a first direction on the base station via a first rail guide and the fluid well holder is guided along the first direction on the base station via the first rail guide or a second rail guide. During the method, the cleaning station is guided along the first direction on the base station via the first rail guide and the fluid well holder is guided along the first direction on the base station via the first rail guide or a second rail guide.

The cleaning station and the fluid well holder are particularly preferably guided along the first direction via the same, namely the first rail guide. This results in a simple design of the device. Furthermore, the cleaning station and the fluid well holder can be moved in the same direction, which results in a compact design of the device. On the other hand, two different rail guides can also be provided, whereby the fluid well holder is movably mounted on the second rail guide. This design has the advantage that the two carriages of the cleaning station and the fluid well holder do not interfere or interfere less. In particular, a design can be achieved in which the two carriages can cross each other.

The first rail guide and, if applicable, the second rail guide can be formed in a manner known to the skilled person. Such a guide can be provided via round bars, for example. Prismatic tracks can also be provided.

The first rail guide can comprise exactly one rail or more than one rail. In a preferred embodiment, the first rail guide comprises a first, preferably horizontally arranged rail and a second, preferably vertically arranged rail, wherein both the cleaning station and the fluid well holder are guided on the first rail and the second rail. With this design, the two rails are particularly good at absorbing torque transverse to the longitudinal direction of the rail.

The bearing can be provided via sliding elements or rolling elements. The skilled person is aware of any number of other variants that are suitable for the application in question.

Preferably, the first rail guide is attached to the side of a housing of the base station. The rail is therefore preferably arranged on a vertical plane. This achieves a compact design.

In variants, the first rail guide can also be located in a support plane of the device, i.e. a horizontal plane, whereby a more solid design can be achieved.

The first rail guide can also comprise a combination of several rails that run in parallel, in particular, for example, two or more rails attached to the side of a housing of the base station and two or more rails lying in the horizontal plane.

If the cleaning station and the fluid well holder are guided on separate rails, one rail is preferably aligned horizontally and the other vertically as described above. It is particularly preferable for the cleaning station to be guided on a horizontally arranged rail guide. Preferably, the fluid well holder is guided on the first rail guide too. However, the skilled person is aware that the cleaning station and the fluid well holder can also be guided on separate rail guides.

Instead of the rail guide, a robot or the like can also be provided. Other alternatives are known to the skilled person.

Preferably, the device comprises a drive for moving the fluid well holder along the first rail guide and the device comprises coupling elements for coupling the cleaning station to the fluid well holder, wherewith the cleaning station can be moved automatically through the fluid well holder. Preferably, the cleaning station is automatically movable exclusively by the fluid well holder. The coupling elements are preferably designed as reversible coupling elements. This means that the cleaning station and the fluid well holder can be connected to and disconnected from each other as required using the coupling elements.

In addition, the device preferably includes at least one sensor for detecting the coupled configuration of the cleaning station and the fluid well holder and/or the position of the cleaning station in order to ensure that the cleaning station is correctly positioned in the cleaning position.

During the method, the fluid well holder is moved by the drive along the first rail guide and the cleaning station is connected by the coupling elements, in particular by magnetic coupling elements, to the fluid well holder. The cleaning station is then moved automatically by the fluid well holder, in particular exclusively moved automatically by the fluid well holder. Preferably, the cleaning station is positioned by the fluid well holder or the drive of the fluid well holder in such a way that the needle of the fluid manipulation head can be cleaned by the cleaning station. In order to guide the needle into the cleaning station, a needle unit of the fluid manipulation head or the fluid manipulation head itself is preferably movable in one direction of the needle longitudinal direction. In variants, the cleaning station can also be designed to be raised and lowered in the longitudinal direction of the needle.

Preferably, the cleaning station is moved to a parking position after the needle has been cleaned. This is preferably done by the drive of the fluid well holder.

In order to decouple the cleaning station from the fluid well holder, preferably in the parking position of the cleaning station, the cleaning station is locked by locking elements relative to the base station and the fluid well holder is moved away from the cleaning station. This allows the coupling elements to be released and the fluid well holder to be separated from the cleaning station.

The drive of the fluid well holder can be arranged in the base station or in the fluid well holder itself. Suitable drive systems for driving the fluid well holder are well known to those skilled in the art; these can be based on an electric motor, for example, and can include a belt drive, a rack and pinion drive, spindle drive, etc.

Preferably, the cleaning station does not have its own drive. The device is preferably designed in such a way that in automatic operation of the device, the cleaning station can be moved along the rail exclusively by the drive of the fluid well holder, in particular by the fluid well holder. This means that automatic movement of the cleaning station is preferably not possible without operating the drive of the fluid well holder.

This means that the cleaning station is preferably drive-free and therefore not directly connected to a drive, but can only be driven indirectly via the drive of the fluid well holder.

In other words, there is preferably exactly one drive for driving the cleaning station and the fluid well holder. This means that either only the fluid well holder can be moved with the one (single) drive or both the fluid well holder and the cleaning station can be moved.

This results in a particularly simple design of the device, as in principle there is no need for a separate drive for the cleaning station. The coupling elements can be used to couple the fluid well holder to the cleaning station, which means that the cleaning station can be moved together with the fluid well holder. The fluid well holder thus preferably serves as a drive for the cleaning station. However, in an alternative embodiment, the drive could be provided for the cleaning station and the fluid well holder would be moved via the cleaning station. In addition to design aspects, the frequency of use must also be taken into account for the arrangement of the drive on the fluid well holder relative to the cleaning station, which means that the drive is preferably coupled to the movable element that is moved more frequently during operation.

Furthermore, the cleaning station and the fluid well holder can also have a common drive with which both can be driven directly. For example, a belt drive can be provided for this purpose, into which either the cleaning station or the fluid well holder can mechanically engage or disengage. Other variants are known to the skilled person.

In a further variation, the fluid well holder and the cleaning station can also be permanently connected to each other, whereby the cleaning station is always moved together with the fluid well holder.

Preferably, the coupling elements are force-fit coupling elements. This ensures that the coupling elements can be released particularly easily. The coupling elements are preferably released as soon as a limiting tensile force between the fluid well holder and the cleaning station is exceeded. Many such coupling elements are known to the skilled person, and their holding force can be defined accordingly. For example, a friction-fit plug-in connection, a hook connection that loosens under the corresponding tensile force, etc. can be provided.

Preferably, the coupling elements comprising magnetic coupling elements. This provides particularly simple coupling elements that are characterized by their reliable function. A particular advantage is that no moving parts need to be provided for these coupling elements, which means that the device as a whole can be designed to be cost-effective and robust. In variants, the coupling elements can also be realized in other ways, for example by a positive connection or frictional connection, in particular a plug-in connection, clamp connection, etc. Many possibilities are known to the skilled person.

The magnetic coupling elements preferably comprise a magnet on the cleaning station and/or on the fluid well holder. In principle, it is sufficient if a magnet is attached either to the cleaning station or to the fluid well holder, whereby a ferromagnetic element or another magnet can be provided as a counterpart to the magnetic coupling element. The ferromagnetic element can preferably be an element already provided at the cleaning station and/or on the fluid well holder, for example a frame element, a screw or the like. This can further simplify the construction of the device.

Preferably the device comprises locking elements for locking a position of the cleaning station relative to the base station. This allows the movement along the rail guide to be blocked. This is particularly advantageous if the coupling elements are designed as force-fit coupling elements, especially as magnetic coupling elements. In this case, to release the coupling elements the position of the cleaning station is blocked and the fluid well holder is then removed from the cleaning station with sufficient force. As soon as the holding force of the coupling elements is exceeded, the fluid well holder will be separated from the cleaning station.

The locking elements can be designed in different ways. For example, a movably mounted latch can be provided on the base station, which in a first position blocks the movement of the cleaning station at least in the direction of the fluid well holder along the rail guide, while in a second position the movement of the cleaning station along the rail guide is free at least in one direction of the fluid well holder. The locking element can be actuated magnetically, for example, so that the cleaning station can be positively locked. The locking elements may also be realized by the fluid manipulation head. This can be positioned in such a way that the movement of the cleaning station can be blocked at least in the direction of the fluid well holder. For this purpose, the fluid manipulation head can be provided with a locking element. Furthermore, an electromagnet can be provided to hold the cleaning station in a locking position. Other variants are known to the skilled person.

The locking elements can also be dispensed with if necessary. Instead, for example, a spacer element can be provided on the cleaning station or on the fluid well holder, with which one carriage (e.g. the cleaning station) is mechanically pushed away from the other carriage (e.g. the fluid well holder) in order to release the locking elements.

Preferably, the cleaning station comprises a first needle receptacle having a first opening for receiving the first needle of the fluid manipulation head and the first needle receptacle further comprises a drain opening for the fluid and whereby the fluid manipulation head can be positioned in such a way that the first needle can be positioned in the first needle receptacle. The cleaning station preferably comprises more than one opening for receiving the first needle and other needles of the fluid manipulation head (see below).

Preferably, the first needle comprises an area with an enlarged cross-section in a proximal area of the needle in order to seal the opening of the first needle receptacle of the cleaning station.

The area with the enlarged cross-section can be formed in any way. For example, the needle can include a widening in the proximal area. The needle can also include a separate element that defines the area with an enlarged cross-section, for example a circumferential sealing element, in particular a rubber seal, a plug or the like.

The region with the enlarged cross-section is preferably connected directly to the needle. In variants, the region with the enlarged cross-section can also be connected indirectly to the needle, for example via a needle holder or the like.

Preferably, the area with an enlarged cross-section comprises a plug, wherein the needle extends out of the plug, wherein the plug having a greater diameter than the first needle in order to seal the opening of the first needle receptacle of the cleaning station in a cleaning configuration. In variants, the plug can also be dispensed with.

Preferably, the plug has a lateral outer surface, the lateral outer surface sealing the opening of the first needle receptacle in the cleaning configuration.

Preferably, the opening comprises a sealing element, in particular an O-ring, wherein the lateral outer surface of the plug is in contact with the sealing element in the cleaning configuration. Therewith, the first needle is preferably introduced into the first needle receptacle in such a way that the lateral outer surface of the plug is in contact with the sealing element, in order to seal the opening of the at last one needle receptacle in the cleaning configuration.

This achieves a particularly tight seal of the receptacle. This also largely prevents the sealing element, in particular the O-ring, from becoming contaminated during the cleaning process. This is achieved by the O-ring interacting laterally with the plug, meaning that the O-ring is hardly or not at all exposed to the cleaning liquid. An X-ring can also be provided instead of an O-ring. An axial seal can also be provided instead of the radial seal. In particular, if an axial seal is provided, a quad ring can also be provided.

In the process, the sealing elements, in particular the O-rings, are preferably wetted. This reduces the resistance for the plug, which simplifies the insertion and removal of the plug into the sealing element.

The lateral outer surface of the plug may have a cylindrical outer shape. This results in a particularly simple plug design. Furthermore, the plug accommodated in the sealing element achieves a sealing effect that is largely independent of the depth of penetration of the plug in the sealing element or the O-ring.

Alternatively, the plug may have a conical outer shape in at least a distal region, which tapers in the distal direction. The outer diameter is thus preferably reduced evenly from the maximum outer diameter to the needle. Preferably, the plug has the shape of a truncated cone in this area. This achieves an improved fit of the plug in the opening of the receptacle, which leads to an optimum seal of the opening regardless of temperature differences or the like. Furthermore, an improved sealing effect is achieved with less force. This means that when the plug is inserted into the opening of the receptacle, a good sealing effect can be achieved with less force. In variants, the conical outer shape can also be dispensed with. The plug can also be shaped in other ways. In a further preferred embodiment, the plug has a cylindrical shape, particularly preferably the shape of a right circular cylinder.

Preferably, the opening is surrounded by a rim, which causes the opening to lie in a trough. The rim can be designed in such a way that all openings are arranged in a common trough. For this purpose, the openings are surrounded by the rim. This ensures that the sealing elements inserted into the openings can be particularly well wetted, since a wetting liquid can be prevented from flowing off by the rim. Furthermore, liquid emerging from the openings can be collected. The rim preferably includes a notch which serves as a spout. This allows any excess liquid to be drained in a controlled manner.

Preferably, the cleaning station further comprises an ultrasonic bath for cleaning the first needle, wherein the ultrasonic bath is neighboring and preferably affixed to the at least one receptacle of the cleaning station. The ultrasonic bath can be used to pre-clean the needles to make the cleaning process particularly efficient. In some variants, the ultrasonic bath can also be dispensed with.

Preferably, the fluid manipulation head comprises between 2 and 20 needles, preferably between 6 and 18 needles, and the cleaning station comprises the equivalent number of receptacles for receiving the needles in the cleaning configuration. In a particularly preferred embodiment, the fluid manipulation head comprises exactly eight needles. In variants, more than 20 needles can also be provided.

Preferably, the needles are aligned in parallel and in a row, in particular in exactly one row. In variants, the needles can also be aligned in more than one row, for example in two rows of 8 needles each. Preferably, all needles are essentially identical, particularly preferably identical. In the present context, 'essentially identical' means that the needles cannot be distinguished in terms of function, this means that the needles are identical, particularly in terms of their dimensions.

Other advantageous embodiments and combinations of features come out from the detailed description below and the entirety of the claims.

### Brief description of the drawings

The drawings used to explain the embodiments show:
- Fig. 1: a schematic isometric projection of a device for handling a fluid, comprising a base station, an aspirating unit, a dispensing unit, a well plate holder and a cleaning station;
- Fig. 2: a schematic isometric view on the guiding mechanism for the plate holder and the cleaning station of the embodiment according to figure 1;
- Fig. 3a: the embodiment according to figure 1, wherein the cleaning station is in the parking position and the well plate holder is coupled to the cleaning station via the coupling element;
- Fig. 3b: the embodiment according to figure 3a, wherein the cleaning station is positioned under the aspirating unit;
- Fig. 3c: the embodiment according to figure 3b, wherein aspirating unit is in the cleaning position;
- Fig. 4: a schematic isometric projection of the cleaning station in the parking position;
- Fig. 5: a schematic cross-section along an x,z plane through a needle receptacle of the cleaning unit; and
- Fig. 6: a schematic isometric explosion view of the aspirating unit and the cleaning unit.

In the figures, the same components are given the same reference symbols.

### Preferred embodiments

For the description of the device, an x, y, z coordinate system is used where the x,y-plane is oriented horizontally, serving as the supporting surface or base for the device. The x-axis and y-axis lie on this horizontal plane, with the z-axis extending vertically. The x,y-plane thus represents the surface upon which the device is placed or mounted, while the z-axis defines the height or elevation of points relative to this horizontal base.

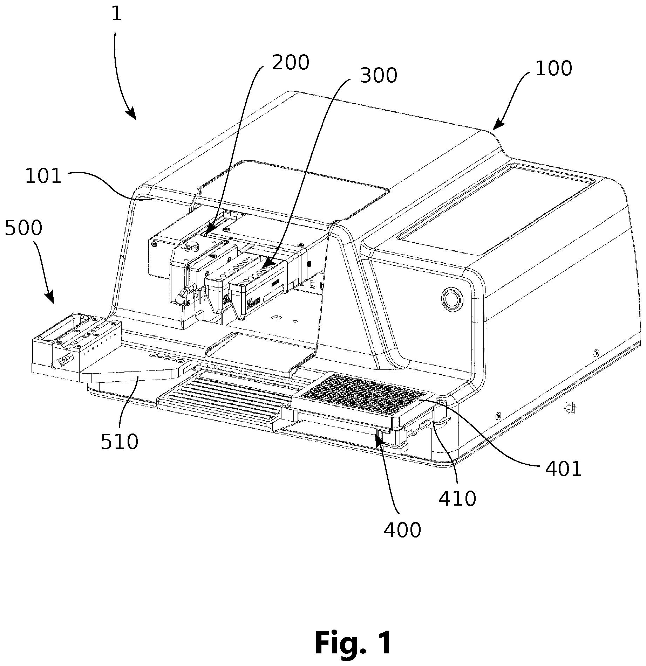

Fig. 1 is an isometric schematic top view of a device 1 for handling a fluid, in particular for dispensing and aspirating a fluid, comprising a base station 100 with a housing 101, an aspirating unit 200 for aspirating a liquid, a dispensing unit 300 for dispensing a liquid, a well plate holder 400 or more generally a fluid well holder for holding a well plate 401, in particular a microplate and a cleaning station 500.

The dispensing unit 300 is a device to automatically dispense selected liquids into individual wells of the well plate 401, in particular a microplate. The dispensing unit 300 is preferably a CERTUS FLEX dispensing unit that is commercially available from Fritz Gyger AG.

The dispensing unit 300 is a device to automatically dispense selected liquids into individual wells of a well plate 401, in particular a microplate. The dispensing unit 300 further comprises a dispensing head with several valves that allow to dispense small dosages of liquids. The dispensing head has several channels that allow to dispense more than one liquid during the same workflow, i.e. without a manipulation of the dispensing unit 300. The dispensing head can move along a horizontal y-axis. This allows the dispensing head to position any of its several valves above any one of the wells in a column of wells. The dispensing head in this embodiment is also able to change its height to adapt to different installations and types of microplates.

The aspirating unit 200 and the dispensing unit 300 are moved together, i.e. they are designed to be movable together in the y-direction and in the z-direction via a common drive. This enables targeted access to individual wells of the well plate.

Since the needle of the aspirating unit 200 can interfere with the dispensing unit 300 during dispensing, or must dip into the liquid of the well plate during aspiration, the needle unit of the aspirating unit 200 can be moved in the z-direction relative to the dispensing unit 300. This means that the needle of the aspirating unit 200 can be lowered in the z-direction with respect to the dispensing nozzles of the dispensing unit 300. This prevents a collision of the dispensing nozzles of the dispensing unit 300 with the well plate.

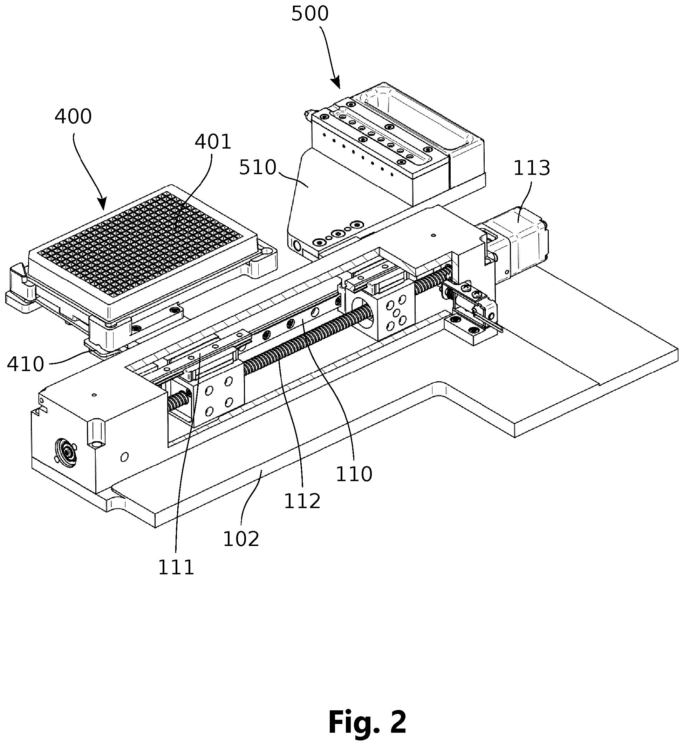

The Figure 2 is a schematic isometric view on the guiding mechanism for the plate holder and the cleaning station of the embodiment according to figure 1. The well plate holder 400 and the cleaning station 500 are movable along an x-axis relative to a ground plate 102 of the base station. For this purpose, the well plate holder 400 is supported on a first carriage 410 and the cleaning station 500 is supported on a second carriage 510. Both the first carriage 410 and the second carriage 510 feature a bearing section cooperating with a first rail guide 110 as well as with a second rail guide 111. The two rail guides 110, 111 extend in the x direction and their main bearing surfaces are perpendicular to each other: The bearing surfaces of the first rail guide 110 extend in a vertical plane, whereas the bearing surfaces of the second rail guide 111 extend in a horizontal plane. (It is to be noted that a middle section of the second rail guide 111 is not shown in Figure 2 in order not to obstruct the view on the first rail guide 110.)

A spindle 112 extends through the carriages. It cooperates with an inner bearing arranged in the bearing section of the first carriage 410, whereas it extends through a through hole in the bearing section of the second carriage 510, without interacting with this carriage 510. The spindle 112 may be driven by a drive motor 113 in order to move the plate holder 400 along the x axis.

The device comprises a control unit with which the drive can be controlled. This allows the well plate holder 400 to be positioned relative to the aspirating unit 200 or the dispensing unit 300 so that different wells of the well plate 401 can be approached.

The aspirating unit 200 and the dispensing unit 300 can be moved in the y-direction relative to the base station 100. This means that the aspirating unit 200 and the dispensing unit 300 can be moved at right angles to the first rail guide. The aspirating unit 200 and the dispensing unit 300 can also be moved in the z-direction. This allows the aspirating unit 200 and the dispensing unit 300 to be moved from a parking position inside the housing 101 to an active position outside the housing 101 (see fig. 1).

In the procedure, the well plate holder 400 with the well plate 401 and the aspirating unit 200 or the dispensing unit 300 can be moved in such a way that the well plate 401 is located below the aspirating unit 200 or the dispensing unit 300. The aspirating unit 200 or the dispensing unit 300 can then be moved in the y-direction towards the well plate 401, whereby a liquid can be aspirated from the well plate 401 using the aspirating unit 200 or dispensed into the well plate 401 using the dispensing unit 300.

When aspirating, the needles of the aspirating unit 200 inevitably come into contact with the liquid in the well plate 401 and must therefore be cleaned. For this purpose, the device includes the cleaning station 500.

In order to achieve a compact design of the device, the aspirating unit 200 and the dispensing unit 300 cannot be moved in the x-direction. Therefore, it is now intended that the cleaning station 500 can be moved in the x-direction.

For this purpose, the cleaning station 500 comprises a carriage 510 that can be moved on the first rail guide 110 of the base station 100.

To keep the device simple and compact, the Washing Station 500 is placed on the first rail guide 110 without a drive. This means that the cleaning station cannot be moved automatically by itself, but can only be moved via the drive of the well plate holder 400. To do this, the drive of the well plate holder 400 can be coupled to the cleaning station 500 in such a way that the cleaning station 500 can be moved along the x-direction by actuating the drive. In the present embodiment, the well plate holder 400 and the cleaning station 500 are equipped with a coupling means by which the well plate holder 400 can be coupled to the cleaning station 500. The coupling means are in the present case designed as a magnetic coupling. This comprises a magnet on the cleaning station 500 and a magnetic element on the well plate holder 400.

The procedure is explained below with reference to Figures 1, 2, 3a to 3c.

Figure 1 shows the device for handling a fluid in a situation, where the cleaning station 500 and the well plate holder 400 are both in a parking position. The parking position of the cleaning station 500 is at the opposite end of the rail guide to the parking position of the well plate holder 400.

In the procedure for cleaning the needles of the aspiration unit 200, the well plate holder 400 is now moved from its parking position (see fig. 1) along the first rail guide in the x-direction to the cleaning station 500, which is in a parking position (see fig. 1). As soon as the distance between the well plate holder 400 and the cleaning station is sufficiently small, the cleaning station 500 docks onto the well plate holder via the magnetic coupling.

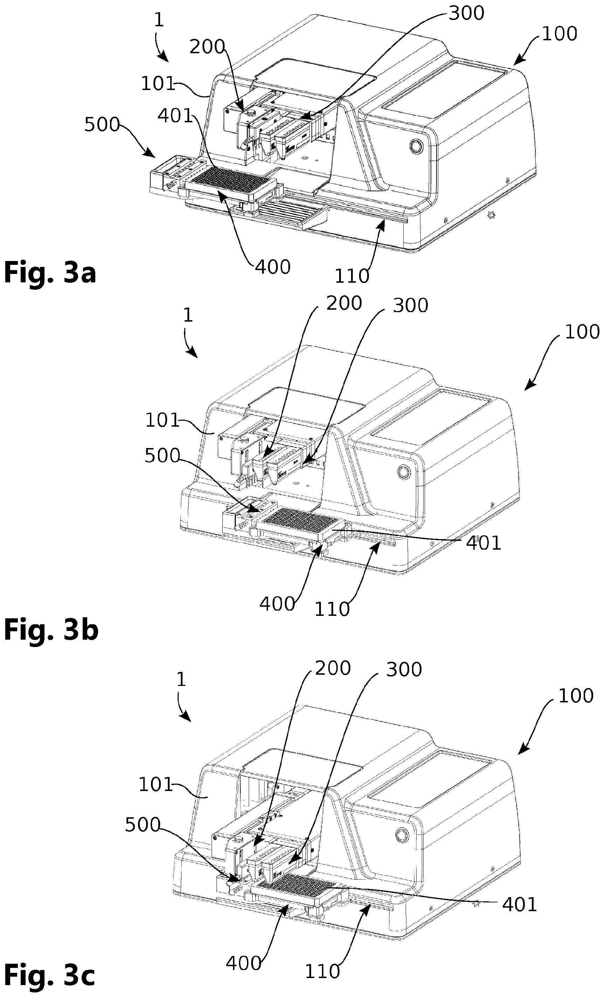

This situation is shown in Figure 3a, where the cleaning station 500 is in the parking position and the well plate holder 400 is coupled to the cleaning station via the coupling element, i.e. the magnetic element.

The well plate holder 400 then moves in the opposite direction along the first rail guide 110, pulling the cleaning station 500 along the first rail guide 110.

The cleaning station 500 is then positioned by the well plate holder 400 under the aspirating unit 200. The aspirating unit 200 is still in the raised position.. This situation is shown in figure 3b.

To carry out the cleaning process, the aspiration unit 200 is now moved downwards in the z-direction so that the needles are positioned in the cleaning station, where the needles are cleaned, which is the active position. This situation is shown in figure 3c.

After the cleaning process, the aspirating unit 200 is raised again in the z-direction to reach the situation shown in figure 3b, and, if necessary, transferred to its parking position (in the y-direction into the housing 101).

The cleaning station 500 is then pushed back to its parking position by the well plate holder 400 as shown in figure 3a.

In this position, the cleaning station 500 is still coupled to the well plate holder 400 via the magnetic coupling. To release this coupling, the device includes a locking element with which the cleaning station can be fixed relative to the base station in the parking position. The locking element includes a latch that arrests the carriage 510 in one direction towards the well plate holder 400.

After the cleaning station 500 has reached the parking position, the cleaning station 500 is locked in the parking position by means of the locking element, and the well plate holder 400 is moved in the opposite direction, away from the locking element causing the magnetic coupling to disengage, leaving the cleaning station 500 in the parking position while the well plate holder 400 moves away from the cleaning station 500 to the parking position of the well plate holder 400 according to figure 1.

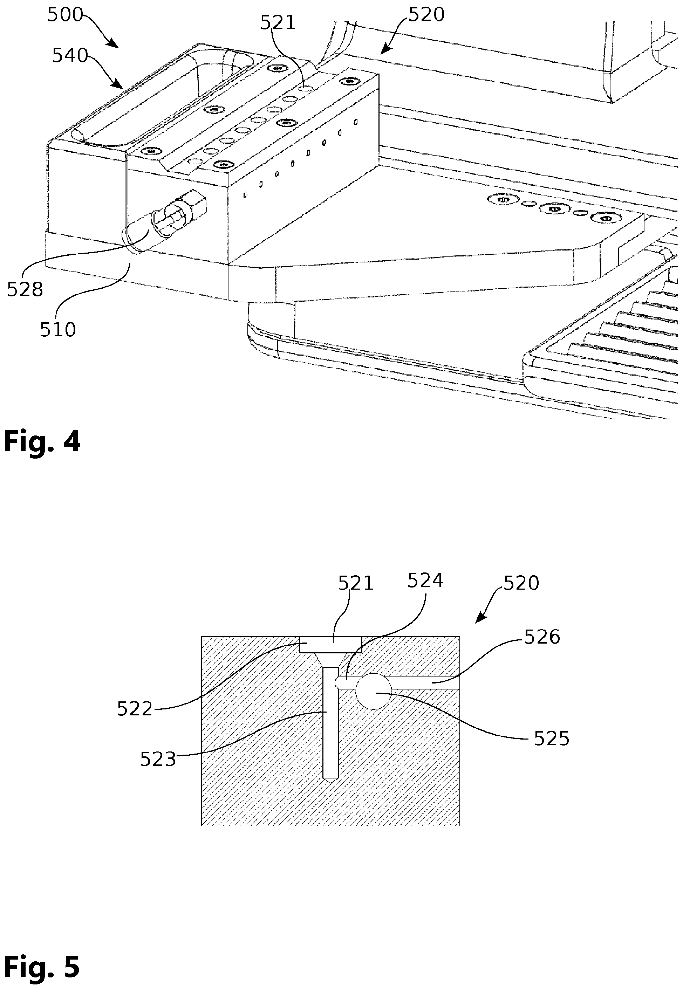

Figure 4 shows a schematic isometric projection of the cleaning station 500 in the parking position.

The cleaning station 500 includes a carrier 510 that is guided on the first rail guide 110 (see above). The carrier 510 is plate shaped and serves as a supporting surface for a cleaning unit 520 and an ultrasonic bath 540.

The ultrasonic bath 540 is arranged behind the cleaning unit 520 in the x-direction, with the cleaning unit 520 facing the well plate holder 400.

The ultrasonic bath 540 is intended to pre-clean any stubborn contamination on the needle of the aspirating unit 200 before the cleaning process in the cleaning unit 520.

The cleaning unit 520 comprises eight needle receptacles 521 in which the needles of the aspirating unit 200 can be received in order to clean them. Furthermore, the cleaning unit 520 includes a fluid outlet 528 for the outflow of the cleaning solution. The fluid outlet 528 is connected to a collecting channel within the cleaning unit 520, which in turn is connected to all needle receptacles 521 (see figure 5). Thus, in the process, a cleaning solution can be pumped through the needles into the needle receptacles 521 via the aspirating unit 200, whereby the needles are also cleaned from the outside before the cleaning solution is discharged via the channel from the fluid outlet 528.

For the magnetic coupling, the well plate holder in this case comprises a first permanent magnet (not shown). The carrier 510 comprises a second permanent magnet, which allows the first permanent magnet to interact magnetically with the second permanent magnet of the carrier 510.

Figure 5 shows a schematic cross-section along an x,z plane through a needle receptacle 521 of the cleaning unit 520.

The needle unit 520 has the basic shape of an elongated cuboid. The needle receptacle 521 is essentially designed as a bore in the Z-direction. This includes an area with an enlarged cross-section 522 at the entrance of the bore, which is adjoined by a coaxial bore 523 designed to accommodate the needle.

Preferably, the needle comprises a proximal plug that serves as a closure for the needle receptacle 521 in the cleaning configuration. The area with an enlarged cross-section 522 is thus provided to receive the needle plug. This prevents uncontrolled leakage of cleaning liquid from the receptacle during the cleaning process. The area with an enlarged cross-section can be accommodated with a sealing element, in particular with an O-ring. Therewith, the sealing of the receptacle during the cleaning configuration can be improved.

The needle receptacle 521 comprises a drain channel 524, which is connected to a collecting channel 525. The drain channel 524 is arranged in an upper area of the coaxial bore 523 and runs horizontally, i.e. in the x,y plane or in the x direction. This ensures that the needle can also be completely cleaned from the outside.

The collecting channel 525 is aligned in the y-direction. All inlets of the eight receptacles 521 lead into the same collecting channel 525. This means that the cleaning liquid from all needle receptacles in the process is discharged via the same collecting channel 525.

The collecting channel 525 runs essentially perpendicular to the coaxial bore 523 and to the drain channel 524. The collecting channel 525 has a larger diameter than the drain channel 524, so that the fluid can be easily discharged through the collecting channel, without causing any back pressure during the cleaning process.

The drain channels 524 open into the collecting channel 525 in the upper half of the collecting channel 525. This prevents the fluid from flowing back from the collecting channel 525 into the receptacle 521. The collecting channel opens into a fluid outlet 528 through which the fluid can be disposed of (see figure 4).

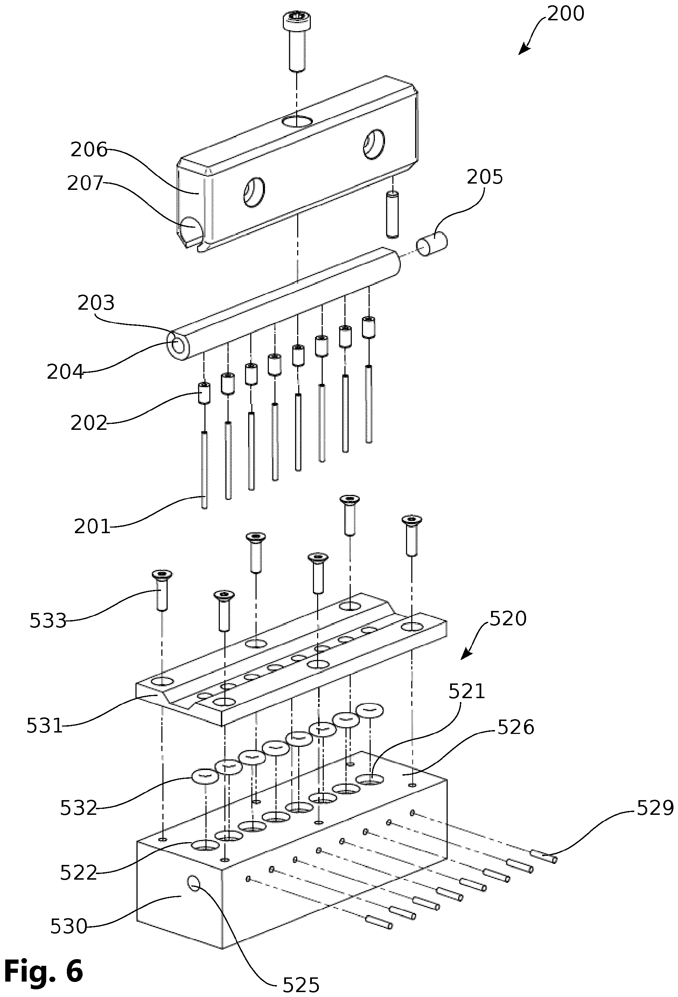

Figure 5 also shows an auxiliary channel 526. This is only necessary for manufacturing reasons. It allows the drain channel to be created from the outside by means of a simple drilling operation. The auxiliary channel 526 is then closed with a dowel 529 up to the collecting channel 525 (see figure 6).

Figure 6 shows a schematic isometric explosion view of the aspirating unit 200 and the cleaning unit 520.

The cleaning unit comprises a base body 530 with eight needle receptacles 521 as described above with reference to Figure 5. An O-ring 532 is inserted in each needle receptacle 521 in the area with an enlarged cross-section 522. In order to hold the O-ring 532 in place, a cover element 531 is provided, which has openings corresponding to the openings of the needle receptacle 521, but which have a smaller diameter than the O-rings 532. The cover element 531 is attached to the base body 530 with screws 533.

The aspirating unit 200 comprises a base body 206 having a receptacle 207 for a needle unit 203.

The needle unit comprises a tubular aspiration channel 203. The aspiration channel 203 is closed at one end by a plug 205, while at the other end an opening 204 is provided which can be connected to a vacuum source (not shown). In a cleaning process, the opening 204 can also be connected to a cleaning agent source or to compressed air in order to clean the needles.

Eight needles 201 are arranged at right angles to the longitudinal direction of the aspiration channel 203, which communicate fluidically with the interior of the aspiration channel. The eight needles 201 are arranged at regular intervals, in a row and in parallel. Proximally, each needle 201 encloses a plug 202. In the cleaning configuration, each plug 202 seals with an O-ring 532, whereby the needle receptacle 521 is closed. In order to optimize the closing effect, the plug 202 is tapered in the distal direction. In a further variant, the plug 202 can also be circular-cylindrical.

The receptacle 207 is designed as a longitudinally slotted bore 207, into which the needle unit 203 can be inserted in such a way that the needles 201 project at right angles out of the slot.

In summary, it is to be noted that the invention provides a particularly compact device for handling a fluid, comprising a cleaning station, which is also particularly simple in design.

## Claims

1. A device (1) for handling a fluid, comprising a base station (100) and a fluid manipulation head with at least a first needle (201) for handling the fluid, and a fluid well holder (400), in particular a well plate-holder, wherein the fluid manipulation head is positionable above the fluid well holder (400), and wherein the device (1) further comprises a cleaning station (500), **characterized in that** the cleaning station (500) is movable relative to the base station (100) in order to be positionable below the fluid manipulation head.

2. The device (1) according to claim 1, **characterized in that** the cleaning station (500) is guided along a first direction on the base station (100) via a first rail guide (110) and the fluid well holder (400) is guided along the first direction on the base station (100) via the first rail guide (110) or a second rail guide .

3. The device (1) according to claim 2, **characterized in that** the device (1) comprises a drive for moving the fluid well holder (400) along the first rail guide (110) and the device (1) comprises coupling elements for coupling the cleaning station (500) to the fluid well holder (400), wherewith the cleaning station (500) can be moved automatically by the fluid well holder (400), preferably, the cleaning station (500) is automatically movably exclusively by the fluid well holder (400).

4. The device (1) according to claim 3, **characterized in that** the coupling elements comprising magnetic coupling elements.

5. The device (1) according to one of the preceding claims, **characterized in that** the device (1) comprises locking elements for locking a position of the cleaning station (500) relative to the base station (100).

6. The device (1) according to one of the preceding claims, **characterized in that** the cleaning station (500) comprises a first needle receptacle (521) having a first opening for receiving the first needle (201) of the fluid manipulation head and the first needle receptacle (521) further comprising a drain opening (524) and/or inlet opening for the fluid and whereby the fluid manipulation head can be positioned in such a way that the first needle (201) can be positioned in the first needle receptacle (521).

7. The device (1) according to claim 6, **characterized in that** the first needle (201) comprises an area with an enlarged cross-section in a proximal area of the needle in order to seal the opening of the first needle receptacle of the cleaning station (500), preferably the area with an enlarged cross-section comprises a plug, the first needle extends out of the plug (202), the plug (202) having a greater diameter than the first needle (201).

8. The device (1) according to claim 7, **characterized in that** the plug (202) has a lateral outer surface, the lateral outer surface sealing the opening of the first needle receptacle (521) in the cleaning configuration.

9. The device (1) according to claim 8, **characterized in that** the opening comprises a sealing element (532), in particular an O-ring, wherein the lateral outer surface of the plug (202) is in contact with the sealing element (532) in the cleaning configuration.

10. The device (1) according to one of claims 6 to 9, **characterized in that** the cleaning station (500) further comprises an ultrasonic bath for cleaning the first needle (201), wherein the ultrasonic bath is neighboring and preferably affixed to the at least one first needle receptacle.

11. The device (1) according to one of claims 1 to 10, **characterized in that** the fluid manipulation head comprises between 2 and 20 needles (201), preferably between 6 and 18 needles and the clean station comprises the equivalent number of receptacles for receiving the needles (201) in the cleaning configuration.

12. A method for cleaning a needle of a fluid manipulation head using a device (1) for handling a fluid according to one of claims 1 to 11, comprising a base station (100) and a fluid manipulation head with at least a first needle (201) for handling the fluid, and a fluid well holder (400), in particular a well plate-holder, wherein the fluid manipulation head is positionable above the fluid receptacle holder, and wherein the device (1) further comprises a cleaning station (500), **characterized by** moving the cleaning station (500) relative to the base station (100), moving the needle along a needle longitudinal direction to the cleaning station (500) and cleaning the needle (201) by the cleaning station (500).

13. The method according to claim 12, **characterized in that** the cleaning station (500) is guided along a first direction on the base station (100) via a first rail guide (110) and the fluid well holder (400) is guided along the first direction on the base station (100) via the first rail guide (110) or a second rail guide .

14. The method according to claim 12 or 13, **characterized in that** the device (1) comprises a drive for moving the fluid well holder (400) along the first rail guide (110) and the device (1) comprises coupling elements for coupling the cleaning station (500) to the fluid well holder (400), and the cleaning station (500) is connected by the coupling elements, in particular by magnetic coupling elements, to the fluid well holder (400) and the cleaning station (500) is moved automatically by the fluid well holder (400), in particular exclusively moved automatically by the fluid well holder (400).

15. The method according to one of claims 12 to 14, **characterized in that**, in order to decouple the cleaning station (500) from the fluid well holder (400), the cleaning station (500) is locked by locking elements relative to the base station (100) and the fluid well holder (400) is moved away from the cleaning station (500).

16. The method according to one of the claims 12 to 15, **characterized in that** the cleaning station (500) comprising a first needle receptacle (521) having a first opening for receiving the first needle (201) of the fluid manipulation head and the first needle receptacle (521) further comprising a drain opening (524) and/or inlet opening for the fluid, whereby the fluid manipulation head is positioned in such a way that the first needle (201) is positioned in the first needle receptacle (521).

17. The method according to claim 16, **characterized in that** the first needle (201) comprises an area with an enlarged cross-section in a proximal area of the needle, wherein the first needle (201) is introduced into the first needle receptacle (521) in such a way that the area with an enlarged cross-section (202) is sealing the opening of the first needle receptacle (521) in the cleaning configuration.

18. The method according to claim 17, **characterized in that** the area with enlarged cross-section is designed as a plug (202) having a lateral outer surface and the first needle (201) is introduced into the first needle receptacle (521) in such a way that the plug (202) is sealing the opening of the first needle receptacle (521) in the cleaning configuration between the lateral outer surface and the opening.

19. The method according to claim 18, **characterized in that** the opening of the first needle receptacle (521) comprises a sealing element (532), in particular an O-ring, wherein the first needle (201) is introduced into the first needle receptacle (521) in such a way that the lateral outer surface of the plug (202) is in contact with the sealing element (532), in order to seal the opening of the at last one needle receptacle (521) in the cleaning configuration.
